(19) Europäisches Patentamt
European Patent Office
Office européen des brevets

(11) **EP 4 726 325 A1**

(12) **EUROPEAN PATENT APPLICATION**
published in accordance with Art. 153(4) EPC

(43) Date of publication:
**15.04.2026  Bulletin 2026/16**

(21) Application number: **24819063.9**

(22) Date of filing: **01.05.2024**

(51) International Patent Classification (IPC):
***G01B 11/28*** (2006.01)          ***B65G 43/08*** (2006.01)
***G01B 11/24*** (2006.01)

(52) Cooperative Patent Classification (CPC):
**B65G 43/08; G01B 11/24; G01B 11/28**

(86) International application number:
**PCT/JP2024/016821**

(87) International publication number:
**WO 2024/252826 (12.12.2024 Gazette 2024/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.06.2023  JP 2023095067**

(71) Applicant: **Kurita Water Industries Ltd.
Tokyo 164-0001 (JP)**

(72) Inventors:
• **ARAI, Takamasa
  Tokyo 100-8280 (JP)**
• **MURAI, Daisuke
  Tokyo 100-8280 (JP)**
• **IGO, Kaori
  Tokyo 100-8280 (JP)**
• **KIKKAWA, Takashi
  Tokyo 164-0001 (JP)**
• **TANIYAMA, Natsumi
  Tokyo 164-0001 (JP)**

(74) Representative: **TBK
Bavariaring 4-6
80336 München (DE)**

(54) **METHOD FOR CALCULATING CONVEYANCE AMOUNT**

(57)     A conveyance amount calculation device (100) comprises a conveyance amount calculation unit (113) that calculates a cross-sectional area of a conveyance object on the basis of belt point-group data indicating the shape of a belt of a belt conveyor for conveying the conveyance object and conveyance object point-group data indicating the shape of the conveyance object, and that calculates the volumetric conveyance amount of the conveyance object on the basis of said cross-sectional area and the belt speed of the belt conveyor. The conveyance amount calculation device (100) further comprises a detection unit (112) that calculates the position of the belt on the basis of point-group data indicating belt end points included in the conveyance object point-group data. The conveyance amount calculation unit (113) may calculate the belt point-group data on the basis of the position of the belt.

[FIG. 4]

**Description**

**TECHNICAL FIELD**

The present invention relates to a method for calculating a conveyance amount which measures a conveyance amount of a conveyance object to be conveyed by a belt conveyor.

**BACKGROUND ART**

There has been a volume measurement method described in Patent Literature 1 as a technique for measuring a volume of an object to be conveyed (a conveyance object) such as dirt, sand, gravel, and aggregate. The aforementioned volume measurement system is a volume measurement system for measuring the volume of the object to be conveyed flowing on a belt conveyor, which at least includes a line laser that irradiates the object to be conveyed with a laser beam from above, a digital camera that shoots an outline of the object to be conveyed drawn by irradiation with the laser beam from an angle different from a direction of irradiation with the line laser, a movement amount sensor that measures a movement amount of the belt conveyor, and an analysis device that calculates a volume of the object to be conveyed from shooting data with the digital camera and the movement amount of the belt conveyor.

**CITATION LIST**

**Patent Literature**

Patent Literature 1: JP2016-133478A

**SUMMARY OF INVENTION**

**Technical Problem**

The volume measurement system described in Patent Literature 1 makes it possible to measure the volume with accuracy corresponding to a resolution of the digital camera. However, since the line laser and the digital camera are used as the sensors, costs inclusive of labor for installation and adjustment thereof are increased. Moreover, costs are increased by complicated processing since the outline drawn on the conveyance object with the laser beam is shot with the digital camera and a cross-sectional area of the conveyance object is calculated by an image analysis.
The present invention has been made in view of the above-mentioned background, and a problem thereof is to provide a method for calculating a conveyance amount of a conveyance object conveyed with a belt conveyor, which enables calculation at high accuracy with low costs.

**Solution to Problem**

To solve the above-mentioned problem, a method for calculating a conveyance amount according to the present invention causes a conveyance amount calculation device to execute the steps of calculating a cross-sectional area of a conveyance object based on belt point-group data indicating a shape of a belt of a belt conveyor for conveying the conveyance object and conveyance object point-group data indicating a shape of the conveyance object, and calculating a volumetric conveyance amount of the conveyance object based on the cross-sectional area and a belt speed of the belt conveyor.

**Advantageous Effects of Invention**

According to the present invention, it is possible to provide a method for calculating a conveyance amount of a conveyance object conveyed with a belt conveyor, which enables calculation at high accuracy with low costs. Problems other than that mentioned above as well as configurations and effects thereof will become clear from the following description of embodiments.

**BRIEF DESCRIPTION OF DRAWINGS**

FIG. 1 is an overall configuration diagram of a conveyance amount calculation system according to the present embodiment.

FIG. 2 is a diagram showing output from a sensor according to the present embodiment when there is no conveyance object.

FIG. 3 is a diagram showing output from the sensor according to the present embodiment when there is a conveyance object.

FIG. 4 is a functional block diagram of a conveyance amount calculation device according to the present embodiment.

FIG. 5 is a diagram for explaining a shift of a belt according to the present embodiment.

FIG. 6 is a diagram for explaining a cross-sectional area of the conveyance object according to the present embodiment.

FIG. 7 is a flowchart of conveyance amount calculation processing according to the present embodiment.

## DESCRIPTION OF EMBODIMENTS

A conveyance amount calculation device according to a mode (an embodiment) of carrying out the present invention will be described below. Two-dimensional point-group data obtained by a sensor installed above a belt conveyor is inputted to the conveyance amount calculation device. For example, the sensor applies LiDAR (light detection and ranging or laser imaging detection and ranging) which makes it possible to obtain a (cross-sectional) shape of a conveyance object as the two-dimensional point-group data by measuring a distance to an object by using a laser beam. Here, the cross-section is a section taken in a width direction (a transverse section).

The conveyance amount calculation device calculates the cross-sectional area of the conveyance object by calculating a difference from two-dimensional point-group data indicating a shape of a belt in a case of absence of the conveyance object, and further calculates a conveyance amount (a volume) by multiplying the cross-sectional area by a belt speed of the belt conveyor.

Here, belts for a belt conveyor include those made of rubber, a resin, a metal, and the like. However, unlike a roller conveyor and the like, such a belt may cause the occurrence of "deflection" or a "shift in a right-left direction" in some cases. This point will be discussed later.

The belt of the belt conveyor may be shifted in the right-left (horizontal) direction relative to a traveling direction. The conveyance amount calculation device detects the shift of the belt by detecting an end point of the belt based on the two-dimensional point-group data, and corrects the two-dimensional point-group data in the case of absence of the conveyance object (the point-group data indicating the shape of the belt), thus calculating point-group data indicating a shape of the shifted belt and obtaining the cross-sectional area. In this way, the conveyance amount calculation device can calculate the conveyance amount at high accuracy even in the case where the belt is shifted.

<<Overall configuration of conveyance amount calculation system>>

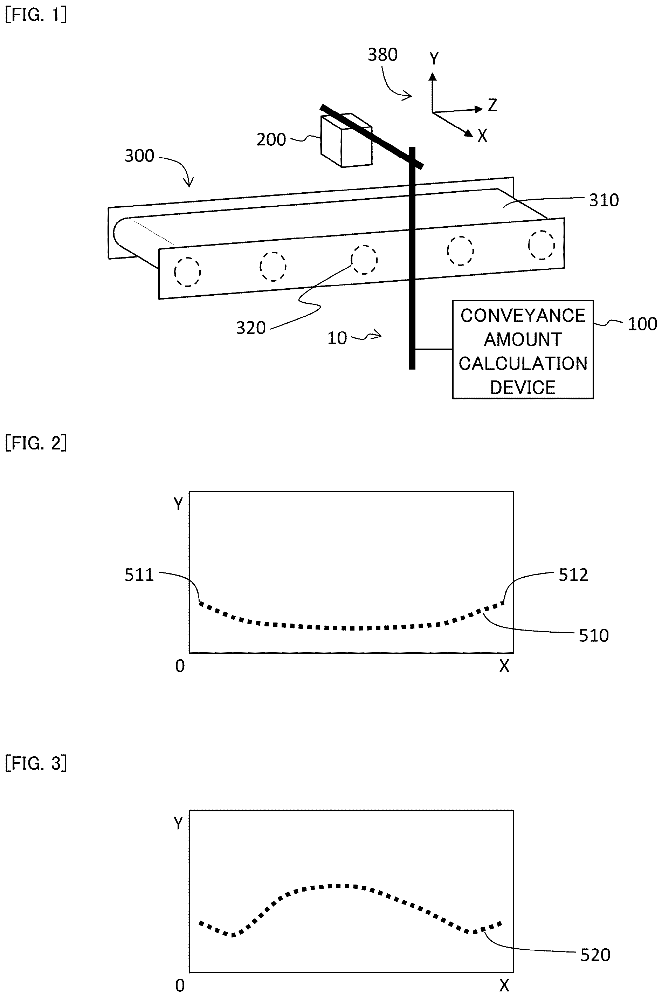

FIG. 1 is an overall configuration diagram of a conveyance amount calculation system 10 according to the present embodiment. The conveyance amount calculation system 10 is configured to include a conveyance amount calculation device 100 and a sensor 200. Reference is made to a three-dimensional coordinate system 380 in the following description. The z axis represents a traveling direction of a belt conveyor 300 (a belt 310). The x axis represents a horizontal (right-left) direction. The y axis represents an up-down direction.

The sensor 200 is installed above the belt conveyor 300, and is configured to measure a shape of a surface of a conveyance object conveyed by the belt conveyor 300 from above, and outputs two-dimensional point-group data representing a measurement result to the conveyance amount calculation device 100. The two-dimensional point-group data will indicate the shape of the surface of the conveyance object on an x-y plane including the sensor 200 (a plane parallel to a plane including the x axis and the y axis and also including the sensor 200).

Here, regarding the belt 310, a deflection amount of the belt 310 is also increased in accordance with a weight (the conveyance amount) of the conveyance object. In the present embodiment, the two-dimensional point-group data of the cross-sectional shape is assumed to be obtained by installing the sensor 200 above a location (a support portion 320 that supports the belt 310 from below) where deflection does not occur (the deflection amount does not change) even if the weight is increased. In addition, data on the shift is assumed to be obtained as well.

<<Two-dimensional point-group data>>

FIG. 2 is a diagram showing output from the sensor 200 according to the present embodiment when there is no conveyance object. A dotted line 510 indicates a two-dimensional point-group (the two-dimensional point-group data) corresponding to a surface of the belt 310. End points 511 and 512 of the dotted line 510 indicate ends of the belt 310.

FIG. 3 is a diagram showing output from the sensor 200 according to the present embodiment when there is the conveyance object. A dotted line 520 indicates a two-dimensional point-group corresponding to the surface of the conveyance object on the belt 310. In the following description, a position of each point of the two-dimensional point-group will be expressed by using a coordinate system that defines the lower left as the point of origin, the lower side as the x axis, and the left side as the y axis in order to facilitate the explanation. These x axis and y axis correspond to the x axis and the y axis in the three-dimensional coordinate system 380 (see FIG. 1), respectively.

<<Configuration of conveyance amount calculation device>>

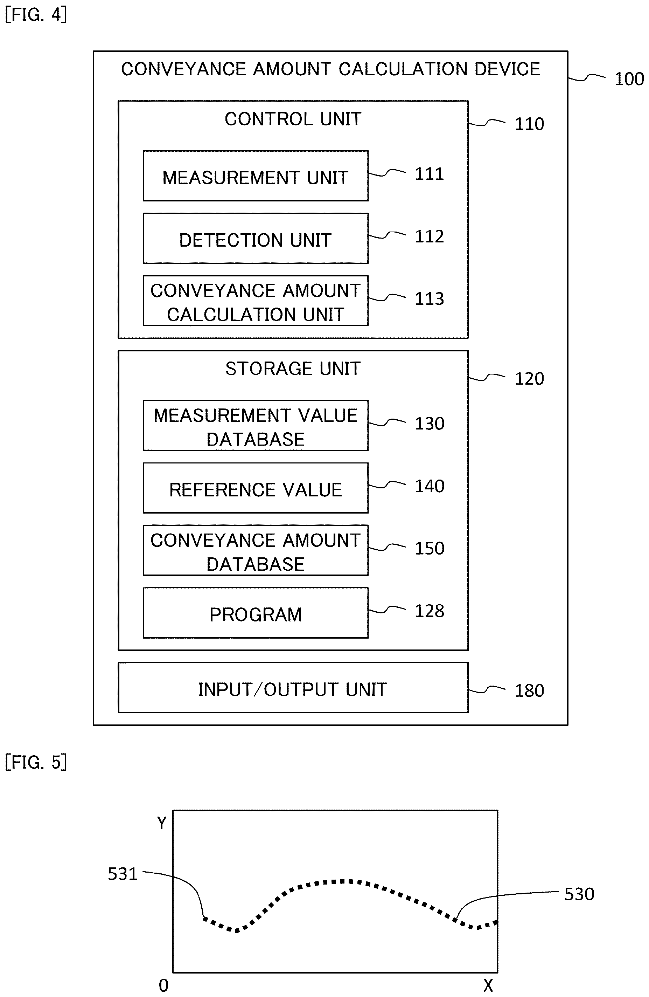

FIG. 4 is a functional block diagram of the conveyance amount calculation device 100 according to the present embodiment. The conveyance amount calculation device 100 is a computer that includes a control unit 110, a storage unit 120, and an input/output unit 180. User interface devices including a display unit, a keyboard, a mouse, and so forth are connected to the input/output unit 180. The input/output unit 180 is equipped with a communication device and is capable of transmitting and receiving data to and from the sensor 200.

<<Conveyance amount calculation device: storage unit>>

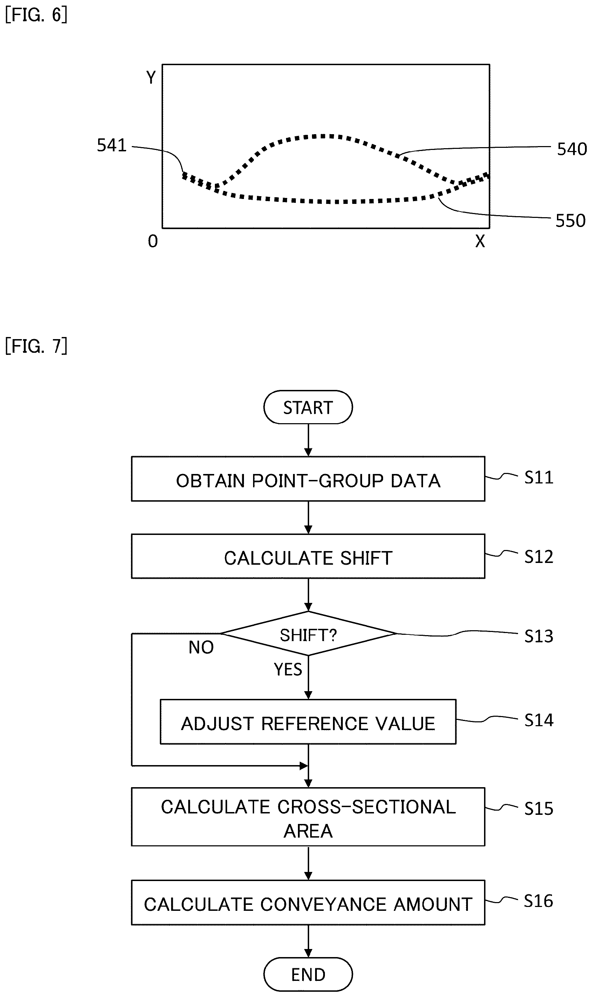

The storage unit 120 is configured to include a storage device such as a ROM (read only memory), a RAM (random access memory), and an SSD (solid state drive). A measurement value database 130, a reference value 140, a conveyance amount database 150, and a program 128 are stored in the storage unit 120. A description of conveyance amount calculation processing (see FIG. 7) to be discussed later is included in the program 128.

Time-series data of the two-dimensional point-group data obtained from the sensor 200 is associated with time of obtainment and stored in the measurement value database 130. The two-dimensional point-group data is a cluster (a coordinate group) of coordinates (x-y coordinates) of points indicating the shape of the surface of the conveyance object or the belt 310, which is obtained on a one-second cycle, for example.

The reference value 140 is the two-dimensional point-group data (see FIG. 2) in the case of absence of the conveyance object, which is a coordinate group of points indicating the dotted line 510. As will be described later, the reference value 140 is (a coordinate group of) the two-dimensional point-group data indicating the surface of the belt 310 in the case where the belt 310 is not shifted to the right and left (in x axis direction).

The conveyance amount database 150 is time-series data of a calculated conveyance amount (a conveyance amount per unit time).

<<Conveyance amount calculation device: control unit>>

The control unit 110 is configured to include a CPU (central processing unit), and is provided with a measurement unit 111, a detection unit 112, and a conveyance amount calculation unit 113.

The measurement unit 111 stores the two-dimensional point-group data being the output from the sensor 200 in the measurement value database 130.

<<Control unit: detection unit>>

The detection unit 112 detects a shift in the right-left direction (x axis direction) relative to the traveling direction (z axis direction) of the belt 310. FIG. 5 is a diagram for explaining the shift of the belt 310 according to the present embodiment. A position in the x axis direction of an end point 531 of a dotted line 530 indicating the surface of the belt 310 or the conveyance object is shifted from a position of the end point 511 in the reference value 140 (see FIG. 2).

The above-mentioned state occurs in a case where the belt 310 is shifted in a positive direction of the x axis. In the above-mentioned state, an end of the belt 310 located on a negative side of the x axis is detected as the end point 531 of the dotted line 530. The detection unit 112 detects the above-mentioned shift of the belt 310 and calculates a shift amount. The shift amount can be calculated by comparing the x coordinate of the end point 531 with the x coordinate of the end point 511 in the reference value 140.

As described above, the conveyance amount calculation device 100 includes the detection unit 112 that calculates the position of the belt 310 in a direction perpendicular to the traveling direction of the belt 310 and in the horizontal direction (the x axis direction).

The detection unit 112 calculates the position of the belt 310 in the direction perpendicular to the traveling direction of the belt 310 and in the horizontal direction (the x axis direction) based on the point-group data (see the end point 531) indicating the end point of the belt 310 included in conveyance object point-group data (see the dotted line 530 described in FIG. 5).

<<Control unit: conveyance amount calculation unit>>

The conveyance amount calculation unit 113 calculates the cross-sectional area of the conveyance object, and calculates the conveyance amount by multiplying the cross-sectional area by the belt speed of the belt 310. FIG. 6 is a diagram for explaining the cross-sectional area of the conveyance object according to the present embodiment. A dotted line 540 shows a two-dimensional point-group corresponding to the surface of the conveyance object on the belt 310. Note that an end point 541 on the left side of the dotted line 540 is shifted to the right side (the positive side of the x axis) in comparison with the x coordinate of the end point 511 in the reference value 140.

A dotted line 550 is a two-dimensional point-group obtained by shifting the two-dimensional point-group indicated by the reference value 140 (see the dotted line 510) in the x axis direction in accordance with the position of the belt 310 calculated by the detection unit 112 based on the dotted line 540. In other words, the dotted line 550 indicates the two-dimensional point-group corresponding to the surface of the belt 310 in the state of absence of the conveyance object at the time of obtaining the two-dimensional point-group indicated by the dotted line 540. Accordingly, a region sandwiched between the dotted lines 510 and the 540 represents the cross-section of the conveyance object. The conveyance amount calculation unit 113 calculates the area of this cross-section and defines it as the cross-section of the conveyance object.

As described above, the conveyance amount calculation device 100 includes the conveyance amount calculation unit 113 which calculates the cross-sectional area of the conveyance object based on belt point-group data (see the dotted line 550) indicating the shape of the belt 310 of the belt conveyor 300 to convey the conveyance object and the conveyance object point-group data (see the dotted line 540) indicating the shape of the conveyance object.

The conveyance amount calculation unit 113 calculates a volumetric conveyance amount of the conveyance object based on the cross-sectional area and the belt speed of the belt conveyor 300.

The conveyance amount calculation unit 113 calculates the belt point-group data (see the dotted line 550) based on the position of the belt 310.

The conveyance amount calculation unit 113 calculates the belt point-group data (see the dotted line 550) based on the point-group data (see the reference value 140 and the dotted line 510) indicating a predetermined shape of the belt and the position of the belt calculated by the detection unit 112.

A method for calculating the cross-sectional are will be described below. The conveyance amount calculation unit 113 regards the dotted lines 510 and 540 as line graphs, and obtains the cross-sectional area by calculating the area between the two line graphs. Next, the conveyance amount calculation unit 113 multiplies the cross-sectional area by the belt speed of the belt 310, thereby calculating the conveyance amount per unit time at the time of obtaining the dotted line 540. Here, the belt speed can be obtained from a control device of the belt conveyor 300.

Alternatively, the conveyance amount calculation unit 113 may calculate a difference between average values of heights (the y coordinate values) of the dotted lines 510 and 540, and may obtain the cross-sectional area by multiplying the difference by a width of the belt 310. The width of the belt 310 is equivalent to widths (lengths in terms of the x coordinates) of the dotted lines 510 and 540.

The conveyance amount calculation unit 113 may calculate an amount of weight conveyed by multiplying the conveyance amount by a specific gravity of the conveyance object. Here, the specific gravity means a bulk specific gravity (a bulk density) in a case of a substance having voids inside such as powder and granules.

As described above, the conveyance amount calculation unit 113 calculates the area between a broken line (see the dotted line 540) indicated by the conveyance object point-group data and a broken line (see the dotted line 510) indicated by the belt point-group data as the cross-sectional area.

The conveyance amount calculation unit 113 calculates a product of a difference between an average height calculated from the conveyance object point-group data (see the dotted line 540) and an average height calculated from the belt point-group data (see the dotted line 510), and the width of the belt 310 (the widths of the dotted lines 510 and 540 (lengths in terms of the x coordinates)) as the cross-sectional area.

The conveyance amount calculation unit 113 calculates the amount of weight conveyed by multiplying the volumetric conveyance amount by the specific gravity of the conveyance object.

<<Conveyance amount calculation processing>>

FIG. 7 is a flowchart of the conveyance amount calculation processing according to the present embodiment. The processing of FIG. 7 is processing to be repeated for each two-dimensional point-group data representing the output from the sensor 200.

In step S11, the measurement unit 111 obtains the two-dimensional point-group data representing the output from the sensor 200, and stores the data in the measurement value database 130.

In step S12, the detection unit 112 detects the end point of the two-dimensional point-group indicated by the two-dimensional point-group data and compares the end point with the reference value 140, thereby calculating the shift of the belt 310.

In step S13, the detection unit 112 determines the absence of the shift if the shift calculated in step S12 is equal to or below a predetermined value (step S13 → No), and proceeds to step S15. The detection unit 112 determines the presence of the shift if the shift exceeds the predetermined value (step S13 → Yes), and proceeds to step S14.

In step S14, the conveyance amount calculation unit 113 adjusts the reference value 140. To describe it in more detail, the conveyance amount calculation unit 113 displaces the reference value 140 in the x axis direction in accordance with the shift.

In step S15, the conveyance amount calculation unit 113 calculates the cross-sectional area based on the two-dimensional point-group (see the dotted line 510) of the reference value 140 adjusted in step S14 and the two-dimensional point-group (see the dotted line 540) obtained in step S11.

In step S16, the conveyance amount calculation unit 113 calculates the conveyance amount (the volumetric conveyance amount) per unit time by multiplying the cross-sectional area calculated in step S15 by the belt speed of the belt 310, and stores the conveyance amount in the conveyance amount database 150 while associating the conveyance amount with the time of obtainment of the two-dimensional point-group data (see step S11). The conveyance amount calculation unit 113 may calculate the amount of weight conveyed per unit time by multiplying the conveyance amount per unit time by the specific gravity of the conveyance object, and may store the amount of weight conveyed per unit time in the conveyance amount database 150 together with the volumetric conveyance amount.

<<Characteristics of conveyance amount calculation device>>

The conveyance amount calculation device 100 calculates the cross-sectional area of the conveyance object based on the two-dimensional point-group (see the dotted line 540) indicating the shape of the surface of the conveyance object and the two-dimensional point-group (see the dotted line 550) indicating the shape of the belt 310 without the conveyance object, and calculates the volume by multiplying the cross-sectional area by the belt speed. In addition, the conveyance amount calculation device 100 calculates the weight. In this way, the conveyance amount calculation device 100 can calculate the conveyance amount with simpler equipment than the related art.

Meanwhile, the conveyance amount calculation device 100 calculates the shift in the right-left direction (the x axis direction) of the belt 310 by detecting the end point thereof, and adjusts the two-dimensional point-group (see the reference value 140 and the dotted line 510) indicating the shape of the belt 310 constituting the basis of calculation of the cross-sectional area. In this way, the conveyance amount calculation device 100 can calculate the conveyance amount at high accuracy even in the case where the belt 310 is shifted.

<<Modified example: calculation of conveyance amount without calculating cross-sectional area>>

In the above-described embodiment, the conveyance amount calculation device 100 calculates the conveyance amount by evaluating the cross-sectional area of the conveyance object. However, the conveyance amount calculation device 100 may calculate the conveyance amount without evaluating the cross-sectional area. The conveyance amount calculation unit 113 may calculate a conveyance weight (the amount of weight conveyed) by using a correlation formula created from a relation between an average height of the conveyance object calculated from the conveyance object point-group data (see the dotted line 530) and a conveyance weight (an amount of weight conveyed) measured with different means such as a metric belt scale. For example, formula (1) being a linear formula as shown below is created from the conveyance weight per unit time measured with the metric belt scale and an average value per unit time of the average height of the conveyance object calculated from the conveyance object point-group data. The conveyance amount calculation unit 113 calculates the conveyance weight based on the average height of the conveyance object by using the formula (1):

$$\text{Conveyance weight per unit time}$$
$$= (\text{average value per unit time of average height of conveyance object}) \times A + B$$
$$(1).$$

As for the unit time in calculating the average value per unit time of the average height of the conveyance object, it is preferable to adopt the unit time used for calculating the conveyance weight measured with the different means. Constants A and B in the formula (1) are constants that vary with the type of the conveyance object, a movement speed of the belt conveyor 300, and the like. Meanwhile, the formula does not always have to be the linear formula as long as the formula can obtain the correlation between the average height of the conveyance object and the conveyance weight.

The use of the above-described mode makes it possible to calculate the conveyance amount without calculating the cross-sectional area of the conveyance object.

As described above, the conveyance amount calculation unit 113 calculates the average height of the conveyance object based on the conveyance object point-group data (see the dotted line 530) indicating the shape of the conveyance object conveyed by the belt conveyor 300, and calculates the amount of weight conveyed or the volumetric conveyance amount of the conveyance object based on the calculated average height by using the correlation (see the formula (1)) between the average height of the conveyance object and either the amount of weight conveyed or the volumetric conveyance amount of the conveyance object.

<<Other modified examples>>

Some of embodiments of the present invention have been described above. However, these embodiments are merely exemplary and do not limit the technical scope of the present invention. The present invention can adopt various other embodiments, and moreover, can carry out various modifications including omission, replacement, and so forth within the range not departing from the gist of the present invention. These embodiments and modifications are encompassed by the scope and gist of the invention described in the present specification and the like, and are also encompassed by the invention as defined in the appended claims and the scope equivalent thereto.

Reference Signs List

100 conveyance amount calculation device
111 measurement unit
112 detection unit
113 conveyance amount calculation unit
128 program
130 measurement value database
140 reference value (point-group data indicating predetermined shape of belt)
150 conveyance amount database
200 sensor
300 belt conveyor
310 belt
510 dotted line (point-group data indicating predetermined shape of belt)
540 dotted line (conveyance object point-group data)
550 dotted line (belt point-group data)

Claims

1. A method for calculating a conveyance amount comprising, causing a conveyance amount calculation device to execute the steps of:

   calculating a cross-sectional area of a conveyance object based on belt point-group data indicating a shape of a belt of a belt conveyor for conveying the conveyance object and conveyance object point-group data indicating a shape of the conveyance object; and
   calculating a volumetric conveyance amount of the conveyance object based on the cross-sectional area and a belt speed of the belt conveyor.

2. The method for calculating a conveyance amount according to Claim 1, further comprising executing the steps of:

   calculating a position of the belt in a direction perpendicular to a traveling direction of the belt and in a horizontal direction based on point-group data indicating an end point of the belt included in the conveyance object point-group data; and
   calculating the belt point-group data based on the position of the belt.

3. The method for calculating a conveyance amount according to Claim 2, further comprising executing the step of:
   calculating the belt point-group data based on point-group data indicating a predetermined shape of the belt and the calculated position of the belt.

4. The method for calculating a conveyance amount according to Claim 1, further comprising executing the step of:

calculating an area between a broken line indicated by the conveyance object point-group data and a broken line indicated by the belt point-group data as the cross-sectional area.

5. The method for calculating a conveyance amount according to Claim 1, further comprising executing the step of: calculating a product of a difference between an average height calculated from the conveyance object point-group data and an average height calculated from the belt point-group data, and a width of the belt as the cross-sectional area.

6. The method for calculating a conveyance amount according to Claim 1, further comprising executing the step of: calculating an amount of weight conveyed by multiplying the volumetric conveyance amount by a specific gravity of the conveyance object.

7. A method for calculating a conveyance amount comprising, causing a conveyance amount calculation device to execute the steps of:

calculating an average height of a conveyance object based on conveyance object point-group data indicating a shape of the conveyance object conveyed by a belt conveyor; and
calculating any of an amount of weight conveyed and a volumetric conveyance amount of the conveyance object based on the calculated average height of the conveyance object by using a correlation between the average height of the conveyance object, and the amount of weight conveyed or the volumetric conveyance amount of the conveyance object.

[FIG. 1]

[FIG. 2]

[FIG. 3]

[FIG. 4]

CONVEYANCE AMOUNT CALCULATION DEVICE ⸺ 100

CONTROL UNIT ⸺ 110

MEASUREMENT UNIT ⸺ 111

DETECTION UNIT ⸺ 112

CONVEYANCE AMOUNT CALCULATION UNIT ⸺ 113

STORAGE UNIT ⸺ 120

MEASUREMENT VALUE DATABASE ⸺ 130

REFERENCE VALUE ⸺ 140

CONVEYANCE AMOUNT DATABASE ⸺ 150

PROGRAM ⸺ 128

INPUT/OUTPUT UNIT ⸺ 180

[FIG. 5]

[FIG. 6]

[FIG. 7]

## INTERNATIONAL SEARCH REPORT

| International application No. |
| --- |
| **PCT/JP2024/016821** |

**A. CLASSIFICATION OF SUBJECT MATTER**

*G01B 11/28*(2006.01)i; *B65G 43/08*(2006.01)i; *G01B 11/24*(2006.01)i
FI:   G01B11/28 Z; B65G43/08 F; G01B11/24 A

According to International Patent Classification (IPC) or to both national classification and IPC

**B. FIELDS SEARCHED**

Minimum documentation searched (classification system followed by classification symbols)

G01B11/28; B65G43/08; G01B11/24

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | CN 110926331 A (CCCC SECOND HARBOUR ENGINEERING COMPANY LTD.) 27 March 2020 (2020-03-27) | 1-6 |
| Y | paragraphs [0001]-[0057], fig. 1-3 | 7 |
| Y | JP 2018-105590 A (KAWASAKI JUKOGYO KABUSHIKI KAISHA) 05 July 2018 (2018-07-05) paragraphs [0037]-[0038], fig. 1 | 7 |
| A | JP 2002-81987 A (TAISEI CORP.) 22 March 2002 (2002-03-22) entire text, all drawings | 1-7 |
| A | JP 2005-282265 A (OHBAYASHI CORP.) 13 October 2005 (2005-10-13) entire text, all drawings | 1-7 |
| A | CN 115479637 A (BEIJING HUANENG XINRUI CONTROL TECHNOLOGY CO., LTD.) 16 December 2022 (2022-12-16) entire text, all drawings | 1-7 |

☐ Further documents are listed in the continuation of Box C.    ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **02 July 2024** | **16 July 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/016821**

| Patent document cited in search report | | | Publication date (day/month/year) | Patent family member(s) | Publication date (day/month/year) |
|---|---|---|---|---|---|
| CN | 110926331 | A | 27 March 2020 | (Family: none) | |
| JP | 2018-105590 | A | 05 July 2018 | (Family: none) | |
| JP | 2002-81987 | A | 22 March 2002 | (Family: none) | |
| JP | 2005-282265 | A | 13 October 2005 | (Family: none) | |
| CN | 115479637 | A | 16 December 2022 | (Family: none) | |

Form PCT/ISA/210 (patent family annex) (July 2022)

## REFERENCES CITED IN THE DESCRIPTION

### Patent documents cited in the description

- JP 2016133478 A